Europäisches Patentamt

European Patent Office

Office européen des brevets

(19)

(11) Veröffentlichungsnummer : **0 439 424 B1**

(12) **EUROPÄISCHE PATENTSCHRIFT**

(45) Veröffentlichungstag der Patentschrift :
**08.03.95 Patentblatt 95/10**

(21) Anmeldenummer : **91810027.2**

(22) Anmeldetag : **15.01.91**

(51) Int. Cl.⁶ : **G02C 7/04**

(54) **Anpassverfahren für eine Kontaktlinse.**

(30) Priorität : **24.01.90 CH 224/90**

(43) Veröffentlichungstag der Anmeldung :
**31.07.91 Patentblatt 91/31**

(45) Bekanntmachung des Hinweises auf die
Patenterteilung :
**08.03.95 Patentblatt 95/10**

(84) Benannte Vertragsstaaten :
**AT BE CH DE DK ES FR GB GR IT LI LU NL SE**

(56) Entgegenhaltungen :
**WO-A-88/01398**
**DE-A- 1 939 157**
**DE-A- 2 748 481**
**DE-A- 2 938 957**
**DE-B- 2 749 144**
**GB-A- 2 031 178**
**US-A- 4 640 594**

(73) Patentinhaber : **CIBA-GEIGY AG**
**Klybeckstrasse 141**
**CH-4002 Basel (CH)**

(72) Erfinder : **Höfer, Peter**
**Karlsbader Strasse 50**
**W-8750 Aschaffenburg (DE)**
Erfinder : **Hagmann, Peter, Dr.**
**Chamissostrasse 20**
**W-8759 Hösbach-Bahnhof (DE)**
Erfinder : **Reichner, Martin**
**Weissenburger Strasse 46**
**W-8750 Aschaffenburg (DE)**
Erfinder : **Herbrechtsmeier, Peter, Dr.**
**Friedrich-Stoltze-Strasse 10**
**W-6240 Königstein (DE)**

EP 0 439 424 B1

## Beschreibung

Die Erfindung betrifft ein Anpaßverfahren für eine Kontaktlinse aus gas- insbesondere sauerstoffdurchlässigem Linsenmaterial und ein Verfahren zur Herstellung einer derartigen Kontaktlinse.

Aus Gründen der üblicherweise besseren Anpassungsfähigkeit an die Augapfelform werden vielfach sogenannte weiche Kontaktlinsen verwendet. Die angestrebte Flexibilität des Linsenmaterials hat aber auch ihre Nachteile. So ist beispielsweise in der US-A-4,820,038 (WO-A-8801398) eine Weichlinse mit einer besonders geringen Mittendicke beschrieben. Die Kontaktlinse ist aufgrund ihrer Flexibilität in direktem Kontakt mit der Cornea, die beim Lidschlag auf die Linse wirkenden Kräfte werden direkt auf die Cornea übertragen. Berücksichtigt man noch, dass durch die spezielle Randgestaltung der Linse eine kleine Auf- und Abbewegung der Linse verursacht wird, so ist die resultierende Irritation des Auges,welche den Tragekomfort beeinträchtigt, leicht einsichtig.

Auch die in der US-A-3,594,074 (DE-A-19 39 157) beschriebene Kontaktlinse ist derart ausgebildet, dass sie auf der Cornea aufliegt. Entsprechend werden Druckkräfte auf die Linse direkt auf die Cornea übertragen und führen zu einer mechanischen Irritation des Auges. Die verwendeten Materialien weisen überdies eine relativ niedrige Sauerstoffdurchlässigkeit auf, so dass insgesamt eine Kontaktlinse vorliegt, welche sowohl hinsichtlich der Sauerstoffversorgung der Cornea alsauch hinsichtlich des Tragekomforts verbesserungswürdig erscheint.

In der US-A-4,239,353 (DE-B-27 49 144) ist eine weiche Kontaktlinse beschrieben, welche einen speziell ausgebildeten weichen Rand aufweist, um die Reissfestigkeit der Linse im Randbereich zu erhöhen und die Anpassbarkeit an individuelle Augapfelformen zu verbessern. Auch bei dieser Linse kommt es zu direkten Uebertragungen von Kräften auf die Cornea und somit zu einer Beeinträchtigung des Tragekomforts.

Auch in der US-A-4,180,308 (DE-A-27 48 481) ist eine weiche Kontaktlinse beschrieben. Aehnlich wie bei den zuvor beschriebenen Linsen kann es auch bei dieser Linse zu Beeinträchtigungen des Tragekomforts durch direkte Druckübertragung auf die Cornea kommen.

In der GB-A-2,031,178 ist eine weitere weiche Kontaktlinse beschrieben. Bei dieser Linse wird durch eine spezielle Ausbildung der Randbereiche versucht eine Bewegung der Linse auf dem Auge zu vermeiden. Auch für diese Linse gelten die Ueberlegungen und Nachteile, die bereits im Zusammenhang mit den zuvor beschriebenen weichen Kontaktlinsen beschrieben wurden.

Da die verwendeten Linsenmaterialien vielfach keine ausreichende Sauerstoffdurchlässigkeit aufweisen, wird mit speziellen Ausbildungen der Kontaktlinse versucht diesem Nachteil abzuhelfen. So ist in der US-A-4,640,594 eine Kontaktlinse mit einer balgartig ausgebildeten Pumpzone beschrieben. Da das verwendete Linsenmaterial nur eine geringe Sauerstoffdurchlässigkeit aufweist, soll durch das Umpumpen der Tränenflüssigkeit eine ausreichende Sauerstoffversorgung der Cornea gewährleistet sein. Abgesehen davon, dass diese Art der Sauerstoffversorgung der Cornea oftmals noch nicht ausreichend ist, führt die spezielle Ausbildung der im Linsenrandbereich angeordneten Pumpzone zusammen mit dem erforderlichen grossen Durchmesser der Kontaktlinse zu einer nicht unbeträchtlichen Irritation des Auges im Bereich des Lides und damit zu einer Einschränkung des Tragekomforts.

Bei Kontaktlinsen, insbesondere auch solchen aus einem sauerstoffdurchlässigen harten oder flexiblen Material, ist man bislang davon ausgegangen, daß bei skleralen Linsen, d. h. bei solchen Linsen, deren äußerer Rand bis in die Sklera des Auges reicht, die Sauerstoffversorgung des Auges unzureichend ist. Man ist dabei beispielsweise in der US-A-4,193,672 (DE-A-29 38 957) davon ausgegangen, dass der Zutritt des Sauerstoffs zu einem großen Teil des Auges bei derartigen Linsen blockiert ist. Um dem abzuhelfen, hat man daher Linsen mit immer kleinerem Gesamtlinsendurchmesser hergestellt. Die Durchmesser liegen daher bei den bekannten Kontaktlinsen zwischen 5,6 und 9 mm. Hierdurch soll eine ausreichende Sauerstoffversorgung der Hornhaut gewährleistet werden, indem bei kleiner werdendem Gesamtdurchmesser die Hornhautfläche, die nicht durch die Linse abgedeckt wird, größenmäßig zunimmt. Man hat daher bislang die Sauerstoffversorgung der Cornea bzw. der Hornhaut durch einen kleineren Linsendurchmesser und eine gewisse beweglichkeit der Linse auf dem Auge sicherzustellen versucht. Gleichzeitig waren hierbei jedoch Maßnahmen erforderlich, um das Zentrierverhalten der kleinen Linsen zu verbessern.

Ein kleiner Linsendurchmesser hat zwangsläufig zur Folge, daß die Lider bzw. die Lidränder beim Lidschlag zunächst mit dem Kontaktlinsenrand in Berührung kommen und bei weiterem Blinkvorgang über den Rand gleiten müssen. Da die Lidränder besonders schmerzempfindlich sind, ist bei solchen Linsen eine lange Eingewöhnungsphase erforderlich, die oft zu einem unzureichenden Blinkvorgang der Augenlider führt. Dies bringt wiederum die Gefahr einer verschlechterten Stoffwechselsituation am Auge mit sich. Zur Verbesserung der Spontanverträglichkeit sind daher erhebliche Anstrengungen bei der Gestaltung des Kontaktlinsenrandes vorgenommen worden.

Aufgabe der Erfindung ist es daher, ein Anpaßverfahren für eine harte Kontaktlinse aus gas- insbesondere sauerstoffdurchlässigem Linsenmaterial zu schaffen, bei der eine einwandfreie Sauerstoffversorgung der Cornea gewährleistet ist und die Verträglichkeit und damit der Tragekomfort erheblich verbessert ist.

Diese Aufgabe wird erfindungsgemäß durch die Merkmale von Anspruch 1 gelöst.

Hierdurch wird eine Zirkulationsmöglichkeit für die Tränenflüssigkeit geschaffen, so daß ein Tränenflüssigkeitsaustausch bzw. -transport von dem Bereich zwischen Corneaoberfläche und Linsenrückseite innerhalb des Tragerandes nach außen und in umgekehrter Richtung gewährleistet ist. Diese Mittel für den Tränenflüssigkeitstransport sind bevorzugt als Kanäle ausgebildet und können im Linsenmaterial oder an der Rückfläche im Bereich des Tragerandes verlaufen.

Es hat sich herausgestellt, daß dann, wenn man in Abhängigkeit von der Augentopographie die Anpassung der Linse in der erfindungsgemäßen Weise durchführt, auch harte Kontaktlinsen mit deutlich größeren Durchmessern als bisher üblich zum Einsatz kommen können, wobei neben der erforderlichen Sauerstoffversorgung der Hornhaut eine erhebliche Verbesserung der Spontanverträglichkeit erreicht wird.

Die Linsendurchmesser können von 10 bis 17 mm in Abhängigkeit von der Augengröße betragen. Bevorzugt kommen Linsendurchmesser von 12,5 bis 13,5 mm zur Anwendung.

Für den Tränenflüssigkeitstransport kann der Linsenkörper im Bereich der Randzone so geformt sein, daß durch die Dynamik des Lidschlages der auf das Auge aufgesetzte Linsenkörper rotiert (Turboeffekt). Ferner kann hierzu der Linsenkörper zur Erzielung eines durch den Lidschlag verursachten Pumpeffektes reversibel elastisch verformbar ausgebildet sein.

Für das Material des Linsenkörpers wird bevorzugt ein gasdurchlässiges, insbesondere sauerstoffdurchlässiges Material verwendet.

Aus dem größeren Durchmesser resultiert eine bessere Spontanverträglichkeit und eine geringere Belastung der Cornea. Ferner werden durch die Erfindung eine definierte Vorgabe eines ausreichend dicken Tränenfilms zwischen der Kontaktlinse und der Cornea, eine verbesserte optische Abbildungseigenschaft, eine Vereinfachung der Anpassung an unterschiedliche Hornhautkrümmungen bzw. -geometrien und somit erhebliche Rationalisierungseffekte bei der Herstellung der harten bzw. flexiblen Kontaktlinsen und ihrer Parameterverteilung erreicht.

Die Vorteile werden insbesondere durch die kombinierte Anwendung folgender Merkmale erzielt:

- Mittel für eine ausreichende Sauerstoffversorgung der Augenoberfläche;
- Aufnahme der auf die Kontaktlinse insbesondere durch Lidschlag wirkenden Kräfte im Bereich der unempfindlichen Sklera, auf welcher der Tragerand an der Linsenrückfläche auf dem Auge aufsitzt;
- im Bereich der Cornea ausreichender Zwischenraum zwischen der Linsenrückfläche und der gegenüberliegenden Corneaoberfläche, wobei dieser Abstand unter Berücksichtigung der Gesamttopographie des Auges, insbesondere in dem Bereich, in welchem der Tragerand auf der Sklera aufsitzt und der Oberfläche der Cornea, durch dreidimensionales Abtasten bzw. dreidimensionale Meßmethoden in ihrer Geometrie erfaßt sind;
- der Linsenrand befindet sich bei auf das Auge aufgesetzter Linse sowohl zumindest zum Teil unter dem oberen Augenlid als auch unter dem unteren Augenlid, so daß ein Anstoßen der Augenlider beim Lidschlag bzw. Blinken gegen den Rand der Kontaktlinse durch den ausreichend groß bemessenen Gesamtdurchmesser der Linse vermieden ist;
- eine unabhängige Optimierung der Randgestaltung, insbesondere im Bereich des Tragerandes, und der Gestaltung der optischen Zone der Linse aufgrund der abgetasteten Augentopographie;
- Herstellung von Linsen mit relativ großen Durchmessern von 10 bis 17 mm, vorzugsweise 12,5 bis 13,5 mm.

Da die optische Zone der Linse und der Tragerand der Kontaktlinse innerhalb eines vergrößerten Gesamtdurchmessers untergebracht werden können, lassen sich die optische Zone und der Tragerand räumlich voneinander deutlich trennen, so daß eine getrennte Optimierung erreicht werden kann.

Diese Optimierung läßt sich in vorteilhafter Weise mit Hilfe eines Verfahrens gewinnen, bei welchem die Hornhaut- und die Skleratopographie zumindest in dem Bereich, in welchem die Linse auf dem Auge aufsitzt, dreidimensional abgetastet wird und die entsprechenden Geometriewerte gespeichert werden. In Abhängigkeit dieser gespeicherten Geometriewerte kann kann dann durch Formgießen oder durch spanende Bearbeitung die Linse aus einem Linsenrohling geformt werden. Letzteres kann mit Hilfe entsprechend gesteuerter Drehautomaten erfolgen. Die Linsenherstellung kann auch durch Bearbeitung mit einem Laser erfolgen.

Mit den zur Verfügung stehenden gasdurchlässigen Linsenmaterialien, die eine hohe Sauerstoffdurchlässigkeit haben, kann die Sauerstoffversorgung der Cornea auch bei vollständiger Bedeckung mit der hart ausgebildeten Kontaktlinse durch den direkten Sauerstofftransport durch das Kontaktlinsenmaterial hindurch sichergestellt werden. Durch die geeignete Gestaltung der Rückfläche der Kontaktlinse wird für einen kontinuierlichen Tränenfilm auf der Cornea, und damit für die erforderliche Sauerstoffversorgung und den erforderlichen Stoffwechsel, gesorgt. Durch geeignete Maßnahmen, wie z. B. eine definierte Rotation der Linse durch Turboeffekt, Fenestration, Ventilationskanäle, Nuten, Kanälen und dgl. an geeigneten Stellen, läßt sich der erforderliche Austausch von Tränenflüssigkeit im Bereich der auf dem Auge sitzenden Kontaktlinse erreichen. Damit wird auch ein Abtransport von Abbauprodukten, insbesondere abgestorbenen Epithelzellen, nach außen erreicht. Dies erfolgt zusätzlich zur direkten Sauerstoffpermeation durch den in der Tränenflüssigkeit gelösten Sauerstoff.

Hierdurch wird die Sicherstellung eines Austausches des Tränenfilms unter der Kontaktlinse gewährleistet. Dieser Tränenfilmaustausch trägt zu einem nicht unerheblichen Teil zur Sauerstoffversorgung der Cornea bei. Beim Tragen der Kontaktlinse erfolgt nämlich die Sauerstoffversorgung der Cornea durch zwei Anteile. Zum einen ist dies der Sauerstoff, welcher durch die Kontaktlinse diffundiert und durch die mittlere Transmissibilität Dk/L beschrieben werden kann. Zum anderen wird die Cornea mit dem Sauerstoff versorgt, welcher in der Tränenflüssiglkeit gelöst ist.

Durch eine ständige Erneuerung des Tränenfilms zwischen Cornea und Kontaktlinse, d. h. bei einer hohen Austauschrate der Tränenflüssigkeit, läßt sich die Sauerstoffversorgung der Cornea auch mit solchen Kontaktlinsen sicherstellen, welche nur geringe Transmissibilitäten haben. Eine Kontaktlinse mit dem corneaskleralen Design, wie es bei der Erfindung zur Anwendung kommt, kann also auch prinzipiell mit Materialien mit kleinem Dk/L-Wert realisiert werden. Durch geeignete Aufeinanderabstimmung des Dk/L-Wertes des Kontaktlinsenmaterials auf die Hydrodynamik, d. h. auf die Austauschrate des Tränenflüssigkeitsfilms, läßt sich im Zusammenhang mit dem gewünschten Tragezyklus eine ausreichende Sauerstoffversorgung erreichen. Ein durchschnittlicher Mindestbedarf an Sauerstofftransmissibilität beträgt bei Tagestragen der Kontaktlinse etwa $24,0 \pm 2,7 \times 10^{-9}$ [(cm/s) x (ml $O_2$/ml x mmHg)] . Bei verlängertem Tragen der Kontaktlinse beträgt dieser Wert $87,0 \pm 3,3 \times 10^{-9}$.

In vorteilhafter Weise wird bei der Erfindung erreicht, daß die Kontaktlinse im Bereich der Cornea nicht auf der Corneaoberfläche aufsitzt, d. h. es findet im Bereich der Cornea keine ständige Berührung zwischen Kontaktlinse und Corneaoberfläche statt - im Gegensatz zu der in der DE-OS 29 38 957 gezeigten Kontaktlinse -. Bei der Erfindung wird mithin die Bildung von "Totwassergebieten", d. h. von nach außen hin abgedichteten Bereichen, in denen der Tränenfilm zwischen der Rückseite der Kontaktlinse und dem Auge eingeschlossen ist, vermieden. Es wird durch die Erfindung dafür Sorge getragen, daß ein ausreichender Abstand zwischen Kontaktlinse und Augenoberfläche vorhanden ist unter Berücksichtigung einer günstigen Kongruenz von Kontaktlinsenrückfläche und Augenvorderfläche. Die auf die Kontaktlinse wirkenden Kräfte, insbesondere beim Lidschlag, werden außerhalb der Cornea aufgenommen und auf die Sklera übertragen. Die mechanische Belastung und Reizung der Cornea ist damit erheblich verringert. Folglich wird an der Cornea annähernd der einer reizfreien Situation entsprechende Stoffwechselrhythmus erreicht. Durch das hiermit verbundene verminderte Auftreten von Abbauprodukten ergeben sich bei der erfindungegemäßen Kontaktlinse weniger Ablagerungen.

Ferner wird durch die minimale Lidirritation das Reizpotential am Auge erheblich reduziert, wodurch die Spontanaber auch die Langzeitverträglichkeit wesentlich verbessert werden. Beide Wirkungen führen zu einer Normalisierung des Stoffwechsels und einer hieraus resultierenden verringerten Neigung zur Ablagerungsbildung.

Aufgrund des gegenüber in bekannten Anpaßverfahren verwendeten Linsen vergrößerten Gesamtdurchmesers der Linse läßt sich auch eine Optimierung der Abbildungseigenschaften der optischen Zone, beispielsweise durch Einsatz entsprechender Rechenprogramme,erreichen. Durch den größeren Durchmesser der optischen Zone werden Randeffekte und Reflexe, wie sie insbesondere beim Tragen von Kontaktlinsen in der Dämmerung auftreten können, vermieden. Damit wird der Visus auch in der Dämmerung und bei Nacht bzw. bei ungünstigen Beleuchtungsverhältnissen deutlich verbessert. Dies ist insbesondere beim Autofahren von Bedeutung. Auf diese Weise bietet die Linse somit auch ein zusätzliches Sicherheitspotential. Durch den größeren Durchmesser der optischen Zone ergeben sich auch erweiterte Gestaltungsmöglichkeiten bei bi- oder multifokalen Kontaktlinsen.

Da die Lider beim Blinken nicht mehr an den Rand der Kontaktlinse stoßen, ist eine besondere Randgestaltung, insbesondere abgerundete Randgestaltung, im Lidbereich nicht mehr unbedingt erforderlich. Auf diese Weise ergibt sich die Möglichkeit, die Randgestaltung eher an die Erfordernisse des Herstellungsprozesses und der Materialeigenschaften anzupassen. Risse und Randausbrüche werden vermieden, wodurch die Sicherheit des Kontaktlinsenträgers erheblich verbessert wird.

Zur Gestaltung der front- und rückseitigen Linsenoberfläche, insbesondere im optischen Linsenbereich, sind alle gängigen Linsengeometrien bzw. Kombinationen von Linsengeometrien möglich. Beispielsweise können diese Geometrien sphärisch einkurvig, sphärisch mehrkurvig, asphärisch einkurvig, asphärisch mehrkurvig, z. b. elliptisch, bi- und multielliptisch oder torisch ausgebildet sein. Mit Hilfe dieser Geometrien können praktisch alle bekannten Sehanomalien, wie z. B. Myopie, Hyperopie und Presbyopie korrigiert werden. Insbesondere ist auch eine rationelle Korrektur von Astigmatismen möglich. Die heute auf aufwendigen bitorischen, innentorischen, randtorischen und rand- und fronttorischen Linsengeometrien beruhenden Anpassungen sind nicht mehr erforderlich.

Die Linsen können nach allen herkömmlichen Verfahren, wie z. B. Drehen, Laserbearbeitung, Tiefziehen, Spritzgießen, Gießformen (Semimold, Fullmold) oder beliebigen Kombinationen hiervon, hergestellt werden. Bevorzugt erfolgt die Linsenherstellung in Abhängigkeit von den gespeicherten Geometriewerten der Augentopographie, die mit Hilfe dreidimensionaler Vermessungsverfahren gewonnen werden können. Hierbei kommt anschließend bevorzugt ein Drehverfahren zur Herstellung der Linse durch spanende Bearbeitung aus einem Linsenrohling zur Anwendung. Eine dreidimensionale Topographieabtastung des Auges ist beispielsweise mit einem "ECT 100 Corneal Topographer" bezeichneten Meßgerät der Firma OPTIMED Inc., Alpharetta möglich.

Durch die erfindungsgemäß angepaßte Kontaktlinse wird ein hoher Tragekomfort, der mit dem Tragekomfort einer weichen Linse vergleichbar ist, bei Erhaltung aller Vorzüge harter flexibler Linsen erreicht. Aufwendige Sonderformen für die Korrektur von beispielsweise Astigmatismen sind nicht mehr erforderlich. Die Anpassung kann durch einige wenige Innenparameter erheblich rationalisiert werden. Aufgrund der hohen Spontanverträglichkeit wird die drop-out-Rate stark reduziert. Man gewinnt eine erhebliche Verbesserung der Langzeitverträglichkeit. Die erfindungsgemäß angepaßte Kontaktlinse kann durch rationale Herstellungsmethoden auch als Einmallinse zum Einsatz kommen. Die beim Tragen weicher Kontaktlinsen häufig auftretenden Schwierigkeiten, wie beispielsweise Vascularisation, unzureichende optische Korrektur usw. ergeben sich bei der erfindungsgemäß angepaßten Linse nicht.

Anhand der in den Figuren dargestellten Ausführungsbeispiele wird die Erfindung noch näher erläutert. Es zeigt:

Fig. 1a und 1b      Ansichten der Vorderfläche eines Ausführungsbeispiels einer erfindungsgemäß angepaßten Kontaktlinse;

Fig. 2a und 2b      Ansichten der Vorderfläche eines weiteren Ausführungsbeispiels einer erfindungsgemäß angepaßten Kontaktlinse;

Fig. 3      eine Teilansicht einer schnittbildlichen Darstellung eines dritten Ausführungsbeispiels der erfindungsgemäß angepaßten Kontaktlinse;

Fig. 4      eine schematische Darstellung einer auf das Auge aufgesetzten Kontaktlinse; und

Fig. 5-7      Ansichten von drei Beispielen der Rückfläche der Kontaktlinse.

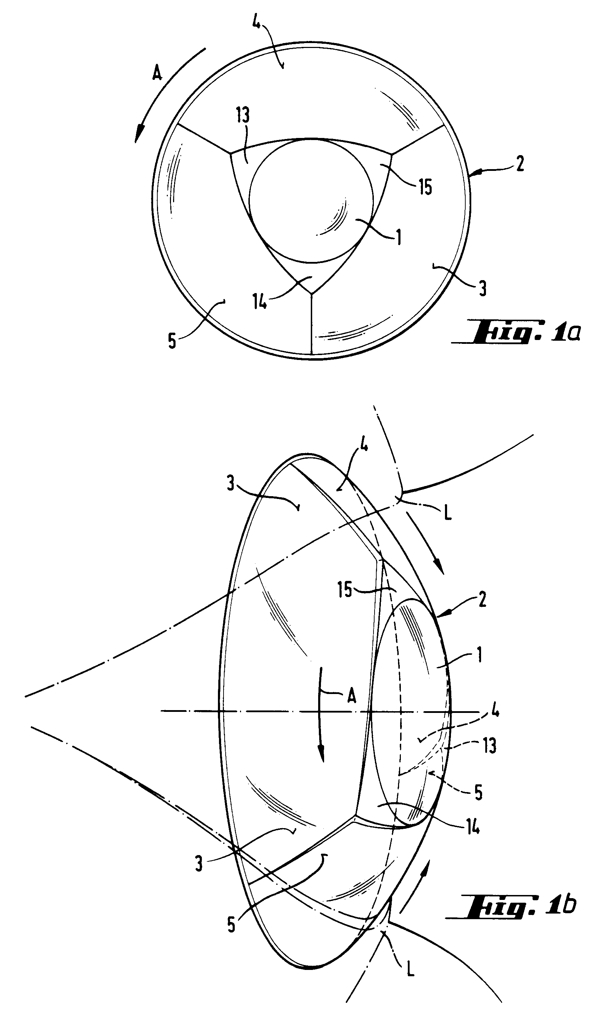

In den Figuren 1b, 1a, 2a und 2b sind Beispiele der Anpassung von Kontaktlinsen dargestellt, bei denen zur Sicherstellung des Austausches des Tränenfilms zwischen der Rückläche der Kontaktlinse und der Augenoberfläche eine Rotation der Kontaktlinse (Turboeffekt) auf dem Auge erfolgt. Diese Rotation wird durch eine spezielle Formgebung an der Vorderfläche der Kontaktlinse in einer Randzone außerhalb eines optischen Teils 1 der Kontaktlinse erreicht. Die spezielle Formgebung in der Randzone ist so gestaltet, daß mit der Dynamik des Lidschlages die Rotation erzwungen wird. Bei dem in den Figuren 1a bzw. 1b dargestellten Ausführungsbeispiel sind hierzu um den optischen Bereich 1 der Kontaktlinse drei abgeflachte Zonen 3, 4, 5 vorgesehen, die sich aneinander anschließen. Die Abflachung ist dabei so, daß beispielsweise durch den Lidschlag eine Drehung der Linse auf dem Auge in Richtung eines Pfeiles A erfolgt. In den jeweiligen abgeflachten Zonen 3, 4 und 5 sind die mit 13, 14 und 15 gekennzeichneten Stellen die höchsten Stellen und, ausgehend von diesen Stellen 13, 14 und 15, sind die Zonen 3, 4 und 5 in Richtung zum Linsenrand hin und entgegengesetzt zur Rotationsrichtung, welche durch den Pfeil A angegeben ist, zur jeweils benachbarten Zone hin abgeflacht. Bei dem in Figuren 2a bzw. 2b dargestellten Ausführungsbeispiel sind auf der Vorderseite schaufelförmige gebogene Erhöhungen 7 bis 12 vorgesehen, welche aufgrund des Lidschlages den Linsenkörper in Rotation versetzen.

Aus der DE-PS 24 15 108 ist es bekannt, zur dynamischen Stabilisierung bei der Achsenkorrektur zwei Randzonen der Kontaktlinse abzuflachen. Hierbei erfolgt jedoch keine Rotation der Kontaktlinse, sondern eine Achsenstabilisierung.

In Fig. 4 ist schematisch eine auf das Auge aufgesetzte Kontaktlinse dargestellt. Es ist deutlich ersichtlich, dass der Linsenkörper 2 einen Tragrand 21 besitzt, der auf der Sklera S aufliegt. Die beiden Augenlider L bedecken den Tragrand 21 zumindest teilweise. Auf diese Weise ausgebildet, nimmt der Tragrand 21 des Linsenkörpers 2 die beim Lidschlag auf die Linse wirkenden Kräfte auf und überträgt sie auf die relativ unempfindliche Sklera. Die Cornea C bleibt unbeeinträchtigt, da zwischen der Rückfläche des Linsenkörpers 2 und der Oberfläche der Cornea C ein Abstand d freibleibt. Auf diese Weise ist sichergestellt, dass es zu keinerlei Druckbeeinträchtigungen und mechanischen Irritationen der Cornea C kommen kann.

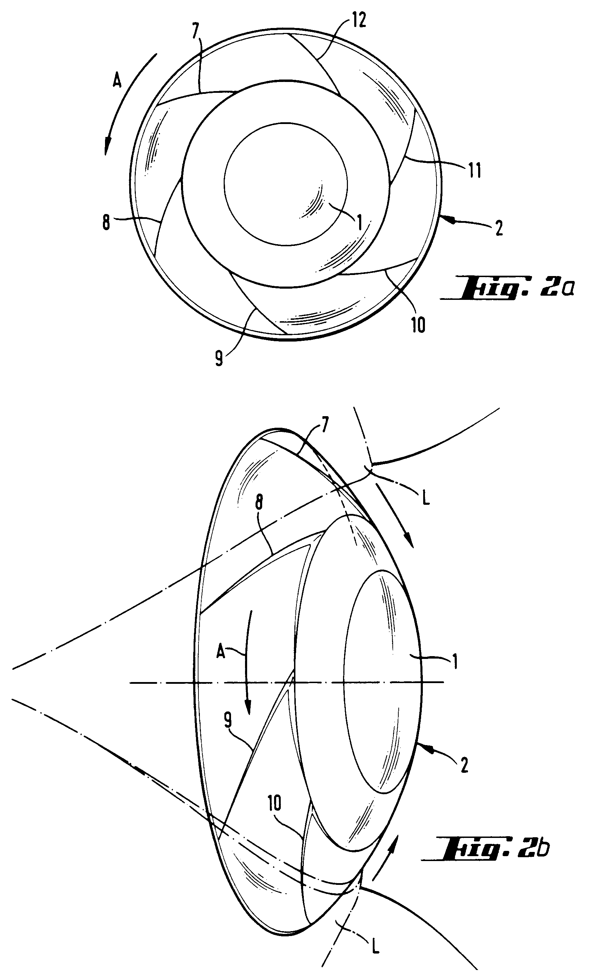

Bei dem in der Fig. 3 dargestellten Ausführungsbeispiel ist ein optischer Bereich 1' der Kontaktlinse an einem Linsengrundkörper 2 vorgesehen. Es handelt sich hier um eine Kontaktlinse in "Clip-In-Optik". Der optische Linsenteil 1' führt in Kombination mit dem Linsengrundkörper 2 zu der geforderten optischen Wirkung. Ferner können andere Funktionen, wie beispielsweise mechanische Stabilität, UV-Absorption usw., durch entsprechende Kombination der Materialeigenschaften von Linsengrundkörper 2 und optischem Linsenteil 1' erreicht werden. Die Materialeigenschaften von optischem Linsenteil 1' und Linsengrundkörper 2 können völlig voneinander verschieden sein. Der optische Linsenteil 1' kann lösbar oder nicht lösbar mit dem Linsengrundkörper 2 verbunden sein. Als Verbindungstechniken kommen Kleben, Klemmen, Laserschweißen oder andere bekannten Verfahren in Betracht. Die beiden Teile 1' und 2 lassen sich in separater Fertigung kostengünstig in großen Serien herstellen. Damit ist insgesamt ein hoher Rationalisierungseffekt erreicht. Vor allem die Verbindungsflächen zwischen optischem Linsenteil 1' und Linsengrundkörper 2 sind von der Topographie der Cornea unabhängig, so daß ihre Formgebung weitgehend standardisiert werden kann. Der Linsengrundkörper 2 übernimmt bei dieser Ausführungsform hauptsächlich die Trägerfunktion und ist vorrangig für die Spontanverträglichkeit verantwortlich.

Der optische Linsenteil 1' hat im wesentlichen nur optische Funktion und kann daher aus einem geeigneten speziellen Material hergestellt sein, das sich allein nicht für die Herstellung der Gesamtkontaktlinse eignen würde. Hierfür können beispielsweise ausschlaggebend sein eine unzureichende mechanische Stabilität, zu hohe Sprödigkeit, zu geringe Sauerstoffdurchlässigkeit und auch ein zu hoher Preis des Materials für den optischen Linsenteil 1'. Auch ist es nicht unbedingt erforderlich, daß der optische Linsenteil 1' eine hohe U-Strahlenabsorption aufweist. Die am optischen Linsenteil 1' nicht vorhandenen Eigenschaften werden dann von dem Linsengrundkörper 2 erfüllt.

Vor allem können die Eigenschaften durch den Linsengrundkörper 2 realisiert werden, welche den erforderlichen Tränenflüssigkeitstransport zwischen Linsenkörper und Augenoberfläche gewährleisten. Zudem kann der Linsengrundkörper 2 auch aus gasdurchlässigem, insbesondere sauerstoffdurchlässigem Material gebildet sein.

Der optische Linsenteil 1' kann jede gewünschte spezielle optische Eigenschaft, insbesondere auch eine multifokale oder auch torische Linsenwirkung besitzen. Durch die Kombination der beiden Standardbauteile werden dann unmittelbar vor Auslieferung die jeweils erforderlichen Linsen nach Kundenwunsch komplettiert, so daß trotz individueller Linsen ein hoher Rationalisierungsgrad bei der Linsenfertigung erreicht wird.

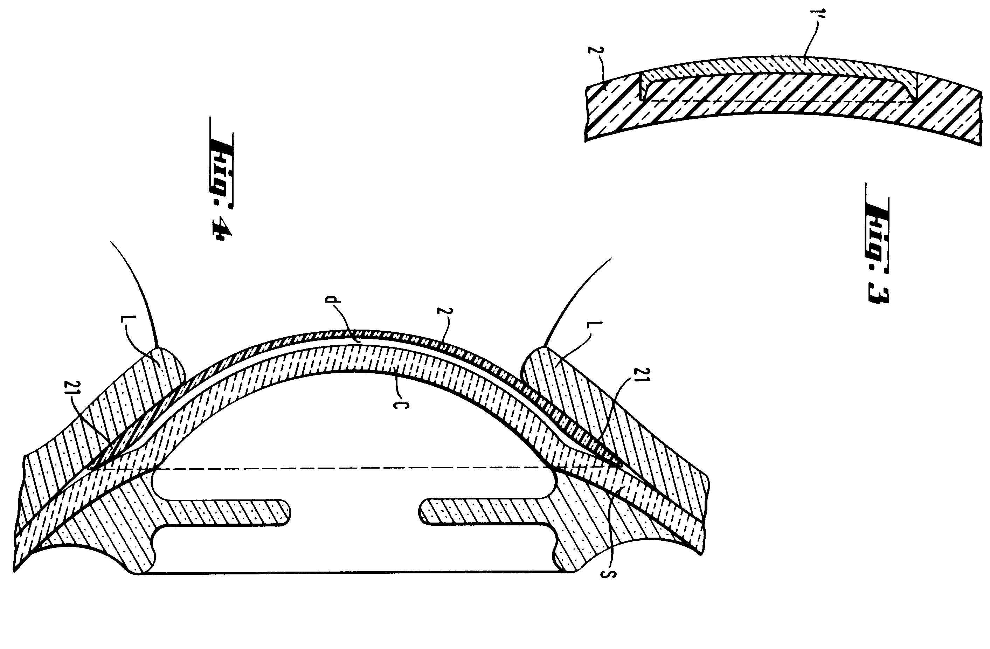

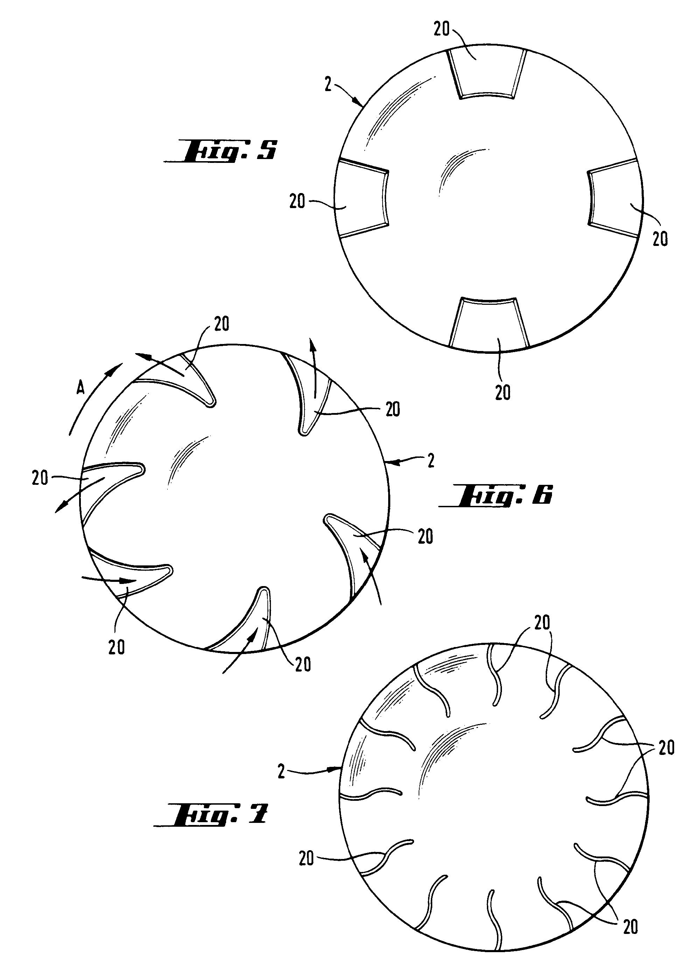

An den Rückflächen der Linsen können insbesondere im Bereich des Linsenrandes Mittel für den Tränentransport 20, insbesondere Vertiefungen vorgesehen sein, so dass bespielsweise in einem Teilbereich der Kontaktlinse der Tränenfilm bei der Rotation bevorzugt zum Zentrum und in einem anderen Teilbereich bevorzugt zum Rand der Kontaktlinse strömt bzw. gepumpt wird. Hierdurch wird der Austausch des Tränenfilms begünstigt. Beispielsweise sind die Vertiefungen 20 in der Rückfläche des Linsenkörpers 2 nutenartig (Fig. 5) oder sägezahnartig (Fig. 6) ausgebildet. Es können aber auch wellenartige gekrümmte, vom Linsenrand bis etwa zum halben Linsenradius etwa radial verlaufende dünne Kanäle 20 vorgesehen sein (Fig. 7).

Der Tränenfilm kann auch dadurch ausgetauscht werden, daß die Kontaktlinse in gewissen Bereichen durch den Lidschlag reversibel elastisch verformt wird. Durch diese reversible elastische Verformung läßt sich ähnlich wie bei einer Membranpumpe ein Pumpeffekt auf den Tränenfilm erzielen.

Für den Austausch des Tränenfilms kann am Rand der Linse auch ein weicher Wellenschliff vorgesehen sein, durch den Strömungskanäle geschaffen werden. Außerdem sind direkt angebrachte flache Kanäle an der Innenfläche oder auch das Anbringen partieller Randverdickungen (Pluslentiform) zur Förderung des Tränenfilmaustausches möglich. Eine Erhöhung der mechanischen Stabilität der Kontaktlinse läßt sich hierdurch ebenfalls zumindest teilweise erreichen.

Im folgenden sind einige Beispiele von Kontaktlinsenmaterialien für harte bzw. flexible Kontaktlinsen und deren zugehörige Permeabilitätskoeffizienten Dk angegeben.

$$\text{Dk-Wert} \quad x \quad 10^{-11} \left[ \frac{cm^2}{s} \cdot \frac{m\ell\, O_2}{m\ell \cdot mmHg} \right]$$

| | |
|---|---|
| PMMA (Polymethylmethacrylat) | <1 |
| CAB (Celluloseacotobytyrat) | 9 |
| Silikon-Copolymere | 54 |
| Fluor-Silikon-Acrylate | 70-150 |
| Fluorcarbon-Polymere | 100 |
| Silikonkautschuk | 130 |

**Patentansprüche**

1. Verfahren zum Anpassen einer Korneosklerallinse, bei dem die anzupassende Linse so ausgewählt wird, dass sie bei auf das Auge aufgesetztem Linsenkörper mit ihrem Tragerand (21) auf der Sklera aufliegt daß der Tragrand von beiden Augenlidern (L) zumindest zum Teil bedeckt ist und die beim Lidschlag auf die Linse wirkenden Kräfte aufnimmt, daß die Linsenrückfläche im gesamten Bereich der Cornea (C) einen Abstand gegenüber der Corneaoberfläche aufweist, und daß die Linse am Linsenkörper Mittel (20) für einen Tränenflüssigkeitstransport zum Austausch des Tränenfilms zwischen der Rückfläche des Linsenkörpers und der Augenoberfläche aufweist,
dadurch gekennzeichnet, dass
eine harte Kontaktlinse gewählt wird, deren Linsendurchmesser im Bereich von 10 mm bis 17 mm liegt.

2. Verfahren nach Anspruch 1, dadurch gekennzeichnet, dass eine Linse mit einem Linsendurchmesser im Bereich von 12.5 mm bis 13.5 mm ausgewählt wird.

3. Verfahren nach einem der Ansprüche 1 oder 2, dadurch gekennzeichnet, dass eine Linse ausgewählt wird, bei der die Mittel (20) für den Tränenflüssigkeitstransport im Bereich des Tragrandes (21) an der Linsenrückfläche vorgesehen sind.

4. Verfahren nach einem der Ansprüche 1 bis 3, dadurch gekennzeichnet, dass eine Linse ausgewählt wird, bei der die Mittel (20) für den Tränenflüssigkeitstransport als Kanäle ausgebildet sind.

5. Verfahren nach einem der Ansprüche 1 bis 4, dadurch gekennzeichnet, dass eine Linse ausgewählt wird, bei der zwischen Tragrand (21) und optischer Zone (1) der Linse eine deutliche räumliche Trennung vorhanden ist.

6. Verfahren nach einem der Ansprüche 1 bis 5, dadurch gekennzeichnet, dass eine Linse ausgewählt wird, die durch die Dynamik des Lidschlags auf dem Auge rotiert.

7. Verfahren nach Korneosklerallinse nach einem der Ansprüche 1 bis 6, dadurch gekennzeichnet, dass eine Linse ausgewählt wird, deren Linsenkörper aus einem sauerstoffdurchlässigen Material besteht.

8. Verfahren nach einem der Ansprüche 1 bis 7, dadurch gekennzeichnet, dass eine Linse ausgewählt wird, deren Linsenkörper zweiteilig ausgebildet ist, wobei in einem Linsengrundkörper ein optischer Linsenteil vorgesehen ist.

9. Verfahren nach Anspruch 8, dadurch gekennzeichnet, dass eine Linse ausgewählt wird, bei der wenigstens der Linsengrundkörper aus sauerstoffdurchlässigem Material gebildet ist.


**Claims**

1. A method of adapting a corneoscleral lens, in which the lens to be adapted is so selected that it rests by its supporting edge (21) on the sclera when the lens body is placed on the eye, the supporting edge is covered at least partially by both eyelids (L) and absorbs the forces acting on the lens as the lids close, the rear face of the lens in the entire region of the cornea (C) is spaced from the surface of the cornea, and the lens has on the lens body means (20) for transporting the lachrymal fluid for the purpose of exchanging the lachrymal film between the rear face of the lens body and the surface of the eye, which method comprises selecting a hard contact lens having a lens diameter in the range of from 10 mm to 17 mm.

2. A method according to claim 1, which comprises selecting a lens having a lens diameter in the range of from 12.5 mm to 13.5 mm.

3. A method according to either claim 1 or claim 2, which comprises selecting a lens in which the means (20) for transporting the lachrymal fluid are provided on the rear face of the lens in the region of the supporting edge (21).

4. A method according to any one of claims 1 to 3, which comprises selecting a lens in which the means (20) for transporting the lachrymal fluid are constructed as channels.

5. A method according to any one of claims 1 to 4, which comprises selecting a lens in which a distinct spatial separation exists between the supporting edge (21) and the optical zone (1) of the lens.

6. A method according to any one of claims 1 to 5, which comprises selecting a lens that rotates on the eye owing to the dynamics of the closing of the lids.

7. A method according to any one of claims 1 to 6, which comprises selecting a lens in which the lens body consists of an oxygen-permeable material.

8. A method according to any one of claims 1 to 7, which comprises selecting a lens in which the lens body is constructed in two parts, an optical lens part being provided in a basic lens body.

9. A method according to claim 8, which comprises selecting a lens in which at least the basic lens body is formed of oxygen-permeable material.

**Revendications**

1. Procédé d'adaptation d'une lentille cornéosclérale dans lequel la lentille à adapter est choisie de manière qu'elle repose sur la sclérotique par son bord porteur (21) lorsque le corps de la lentille est posé sur l'oeil, que le bord porteur soit au moins en partie recouvert par les deux paupières de l'oeil (L) et qu'il absorbe les forces agissant sur la lentille en cas de battement des paupières, que la face arrière de la lentille présente un intervalle par rapport à la surface de la cornée dans toute la zone de la cornée (C), et que la lentille présente, sur le corps de la lentille, un moyen (20) pour le transport du liquide lacrymal afin de renouveler le film lacrymal entre la face arrière du corps de la lentille et la surface de l'oeil, caractérisé en ce qu'on choisit une lentille de contact dure dont le diamètre est compris entre 10 mm et 17 mm.

2. Procédé selon la revendication 1, caractérisé en ce qu'on choisit une lentille ayant un diamètre compris entre 12,5 mm et 13,5 mm.

3. Procédé selon l'une des revendications 1 ou 2, caractérisé en ce qu'on choisit une lentille dans laquelle sont prévus les moyens (20) pour le transport de liquide lacrymal dans la zone du bord porteur (20) à la face arrière de la lentille.

4. Procédé selon l'une des revendications 1 à 3, caractérisé en ce qu'on choisit une lentille dans laquelle les moyens (20) pour le transport de liquide lacrymal ont la forme de canaux.

5. Procédé selon l'une des revendications 1 à 4, caractérisé en ce qu'on choisit une lentille dans laquelle entre le bord porteur (21) et la zone optique (1) de la lentille se trouve une séparation spatiale nette.

6. Procédé selon l'une des revendications 1 à 5, caractérisé en ce qu'on choisit une lentille qui par la dynamique du battement des paupières présente une rotation sur l'oeil.

7. Procédé d'application d'une lentille cornéosclérale selon l'une des revendications 1 à 6, caractérisé en ce qu'on choisit une lentille dont le corps de lentille se compose d'une matière perméable à l'oxygène.

8. Procédé selon l'une des revendications 1 à 7, caractérisé en ce qu'on choisit une lentille dont le corps de lentille est formé en deux parties, où dans le corps de base de la lentille est prévue une partie optique.

9. Procédé selon la revendication 8, caractérisé en ce qu'on choisit une lentille dans laquelle au moins le corps de base de la lentille est formé d'une matière perméable à l'oxygène.

**Fig. 1a**

**Fig. 1b**

Fig. 2a

Fig. 2b

Fig. 3

Fig. 4

Fig. 5

Fig. 6

Fig. 7